# EUROPEAN PATENT APPLICATION

(11) **EP 4 783 140 A1**
(43) Date of publication of application: **29.07.2026**
(21) Application number: 25867178.3
(22) Date of filing: 07.07.2025
(51) Int. Cl.: G08B 17/117, G08B 21/18, G08B 25/14, G01K 1/02, G06V 20/58, G06V 20/62, H04W 4/14, H04W 4/46, B60L 3/00, B60W 40/02

(54) **VEHICLE FIRE ALARM METHOD, VEHICLE FOR PERFORMING SAME METHOD, AND STORAGE MEDIUM FOR STORING PROGRAM FOR EXECUTING SAME METHOD**

(30) Priority: 22.11.2024 KR 20240167917; 04.07.2025 KR 20250089663
(71) Applicant: LG ENERGY SOLUTION, LTD., Seoul 07335 (KR)
(72) Inventor: CHO, Hyo Seok, Daejeon 34122 (KR)
(74) Representative: Plasseraud IP
(86) International application number: PCT/KR2025/009688
(87) International publication number: WO 2026/111081

(57) **Abstract**

A vehicle fire alarm method, a vehicle for performing the method, and a storage medium for storing a program to execute the method prevent the spread of a fire by providing a vehicle fire alarm from a fire vehicle to surrounding vehicles, thereby inducing vehicles to rapidly move

## Description

### [Technical Field]

The present disclosure relates to a vehicle fire alarm method, a vehicle for performing the method, and a storage medium for storing a program to execute the method.

### [Background Art]

When a fire is detected in a vehicle due to ignition of a battery installed in the vehicle, it is necessary to rapidly notify the vehicle and surrounding vehicles of the fire occurrence to prevent the spread of the fire.

### [Disclosure]

### [Technical Problem]

An embodiment of the present disclosure provides a vehicle fire alarm method, a vehicle for performing the method, and a storage medium for storing a program to execute the method for providing a vehicle fire alarm from a fire vehicle to surrounding vehicles.

The objects to be achieved in the present disclosure are not limited to the objects mentioned above, and can be expanded in various manners without departing from the spirit and scope of the present disclosure.

### [Technical Solution]

A vehicle fire alarm method according to an embodiment of the present disclosure includes obtaining information on whether a fire has occurred in a vehicle based on a temperature value of the vehicle, and providing a fire alarm to at least one of a user terminal corresponding to the vehicle or a user terminal corresponding to a surrounding vehicle located around the vehicle if it is determined that a fire has occurred in the vehicle.

The providing a fire alarm may include providing a fire alarm to a user terminal corresponding to a vehicle number of the surrounding vehicle identified using images acquired through cameras mounted on the vehicle.

The providing a fire alarm may include obtaining the images including the surrounding vehicle through the cameras mounted on the vehicle, identifying the vehicle number of the surrounding vehicle based on the images, and providing a fire alarm message including the vehicle number of the surrounding vehicle and vehicle information of the vehicle to an integrated management server to provide the fire alarm to at least one of the user terminal corresponding to the vehicle information of the vehicle or the user terminal corresponding to the vehicle number of the surrounding vehicle through the integrated management server.

The providing a fire alarm may include obtaining the images including the surrounding vehicle through the cameras mounted on the vehicle and providing a fire alarm message including the images and the vehicle information of the vehicle to an integrated management server to provide the fire alarm to at least one of the user terminal corresponding to the vehicle number of the surrounding vehicle identified based on the images or the user terminal corresponding to the vehicle information of the vehicle through the integrated management server.

The providing a fire alarm may include providing a fire alarm message including the vehicle information of the vehicle to a first dedicated management server managing the vehicle if it is determined that a fire has occurred in the vehicle, and providing a fire alarm to the user terminal corresponding to the vehicle information of the vehicle through the first dedicated management server.

The first dedicated management server may identify the vehicle number of the surrounding vehicle based on the images acquired by the cameras mounted on the vehicle and included in the fire alarm message when the fire alarm message is received from the vehicle, provide a fire alarm to the user terminal corresponding to the vehicle number of the surrounding vehicle if the surrounding vehicle is a vehicle managed by the first dedicated management server, and provide the vehicle number of the surrounding vehicle to a second dedicated management server selected based on a manufacturer of the surrounding vehicle if the surrounding vehicle is a vehicle not managed by the first dedicated management server.

The second dedicated management server may provide a fire alarm to the user terminal corresponding to the vehicle number of the surrounding vehicle when the vehicle number of the surrounding vehicle is received from the first dedicated management server.

The first dedicated management server may provide the images acquired by the cameras mounted on the vehicle and included in the fire alarm message to at least one second dedicated management server when the fire alarm message is received from the vehicle, identify the vehicle number of the surrounding vehicle based on the images, and provide a fire alarm to the user terminal corresponding to the vehicle number of the surrounding vehicle if the surrounding vehicle is a vehicle managed by the first dedicated management server.

When the images are received from the first dedicated management server, the second dedicated management server may identify the vehicle number of the surrounding vehicle based on the images, and provide a fire alarm to the user terminal corresponding to the vehicle number of the surrounding vehicle if the surrounding vehicle is a vehicle managed by the second dedicated management server.

The images may include front and rear view images acquired through the cameras mounted on the vehicle determined to have a fire, and front and rear view images acquired through cameras mounted on the surrounding vehicle.

The obtaining information on whether a fire has occurred in a vehicle may include determining that a fire has occurred in the vehicle if the temperature value of the vehicle is equal to or higher than a preset threshold temperature value.

The threshold temperature value may be a battery thermal runaway threshold value greater than a battery overheating threshold value.

The obtaining information on whether a fire has occurred in a vehicle may include determining that a fire has occurred in the vehicle if the temperature value of the vehicle is equal to or higher than a preset threshold temperature value and/or a gas amount of the vehicle is equal to or greater than a preset threshold gas amount.

A computer-readable storage medium according to an embodiment of the present disclosure stores a program to execute the vehicle fire alarm method on a computer.

A vehicle according to an embodiment of the present disclosure includes a temperature sensor configured to measure temperature, and an ECU configured to obtain information on whether a fire has occurred based on a temperature value measured through the temperature sensor, and provide a fire alarm to at least one of a user terminal corresponding to the vehicle or a user terminal corresponding to a surrounding vehicle located around the vehicle.

### [Advantageous Effects]

According to an embodiment of the present disclosure, it is possible to promptly induce vehicles to move to prevent a fire from spreading by providing a vehicle fire alarm from a fire vehicle to surrounding vehicles.

The effects according to various embodiments of the present disclosure are not limited to the effects described above, and it is obvious to those skilled in the art that various effects are inherent in the present disclosure.

### [Description of Drawings]

FIG. 1 is a block diagram illustrating an example of a vehicle fire alarm system according to an embodiment of the present disclosure.
FIG. 2 is a block diagram illustrating a vehicle illustrated in FIG. 1.
FIG. 3 is a flowchart illustrating an example of a vehicle fire alarm method according to an embodiment of the present disclosure.
FIG. 4 is a flowchart illustrating an example of a fire alarm provision step illustrated in FIG. 3.
FIG. 5 is a flowchart illustrating another example of the fire alarm provision step illustrated in FIG. 3.
FIG. 6 is a block diagram illustrating another example of the vehicle fire alarm system according to an embodiment of the present disclosure.
FIG. 7 is a flowchart illustrating another example of the vehicle fire alarm method according to an embodiment of the present disclosure.
FIG. 8 is a flowchart illustrating an example of a fire alarm provision step illustrated in FIG. 7.
FIG. 9 is a flowchart illustrating another example of the fire alarm provision step illustrated in FIG. 7.

### [Mode for Disclosure]

Hereinafter, embodiments of the present disclosure will be described in detail with reference to the attached drawings. The advantages and features of the embodiments of the present disclosure, and methods for achieving the same will become clear with reference to the contents described in detail below together with the attached drawings. However, the embodiments of the present disclosure are not limited to the embodiments described below, but may be implemented in various different forms, and the embodiments of the present disclosure are defined only by the scope of the claims.

Like reference numerals refer to like elements throughout the specification. Unless otherwise defined, all terms (including technical and scientific terms) used in the specification may be used in meanings that can be commonly understood by a person having ordinary knowledge in the technical field to which the embodiments of the present disclosure belong. In addition, terms defined in a commonly used dictionary shall not be ideally or excessively interpreted unless explicitly specifically defined.

In the present disclosure, the terms "first", "second", etc. are used to distinguish a particular component from other components, and the components described above are not limited by these terms. For example, the "first" component may be used to refer to an element of the same or similar form as the "second" component.

In this specification, identification symbols (e.g., a, b, c, etc.) for each step are used for convenience of explanation, and the identification symbols do not describe the order of steps, and the steps may occur in a different order than the stated order unless the context clearly indicates a specific order. That is, the steps may occur in the same order as the stated order, may be performed substantially simultaneously, or may be performed in the opposite order.

In the present disclosure, the terms "comprise", "comprising", and the like may indicate the presence of features (for example, numerical values, functions, operations, or components such as parts), but such terms do not exclude additional features.

Hereinafter, a vehicle fire alarm, a vehicle for performing the method, and a storage medium for storing a program to execute the method according to an embodiment of the present disclosure will be described in detail with reference to the attached drawings.

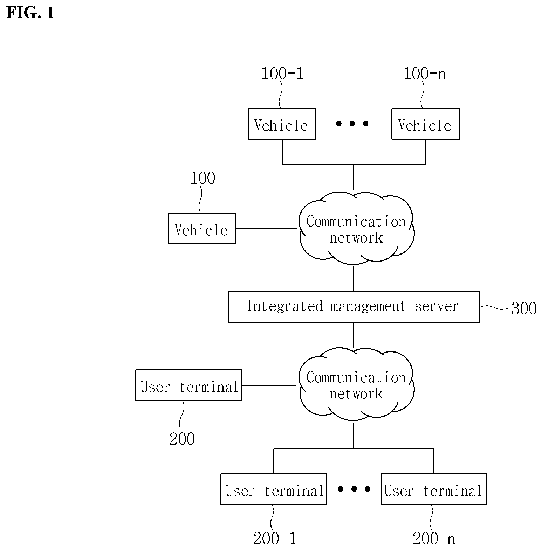

First, with reference to FIG. 1 to FIG. 5, an example of a vehicle fire alarm operation according to an embodiment of the present disclosure will be described.

FIG. 1 is a block diagram illustrating an example of a vehicle fire alarm system according to an embodiment of the present disclosure.

Referring to FIG. 1, the vehicle fire alarm system according to an embodiment of the present disclosure may include a plurality of vehicles 100 and 100-1 to 100-n, an integrated management server 300 connected to the plurality of vehicles 100 and 100-1 to 100-n through a communication network, and a plurality of user terminals 200 and 200-1 to 200-n connected to the integrated management server 300 through a communication network.

If a subject vehicle 100 determines that a fire has occurred therein, the subject vehicle 100 may provide a fire alarm to the vehicle 100 and surrounding vehicles 100-1 to 100-n in order to induce evacuation of the subject vehicle 100 and the surrounding vehicles 100-1 to 100-n.

The integrated management server 300 refers to a server that manages all vehicles 100 and 100-1 to 100-n in an integrated manner regardless of the manufacturers of the vehicles 100 and 100-1 to 100-n. Upon reception of a fire alarm from the subject vehicle 100, the integrated management server 300 may provide the fire alarm to at least one of the user terminal 200 corresponding to the subject vehicle 100 or the user terminals 200-1 to 200-n corresponding to the surrounding vehicles 100-1 to 100-n of the subject vehicle 100. To this end, the integrated management server 300 may store vehicle information such as vehicle models, vehicle manufacturers, vehicle numbers, chassis numbers, and information for identifying the user terminals 200 and 200-1 to 200-n of vehicle owners/drivers.

The user terminals 200 and 200-1 to 200-n refer to terminals possessed by the drivers or owners of the vehicles 100 and 100-1 to 100-n. Upon reception of a fire alarm from the integrated management server 300, the user terminals 200 and 200-1 to 200-n may output the fire alarm through a visual method, an auditory method, and/or a tactile method. Here, the user terminal 200 may be a terminal equipped with a memory and a microprocessor and having a computing capability, such as a desktop computer, a notebook computer, a workstation, a palmtop computer, a tablet, a personal digital assistant (PDA), a web pad, a smartphone, and a mobile phone.

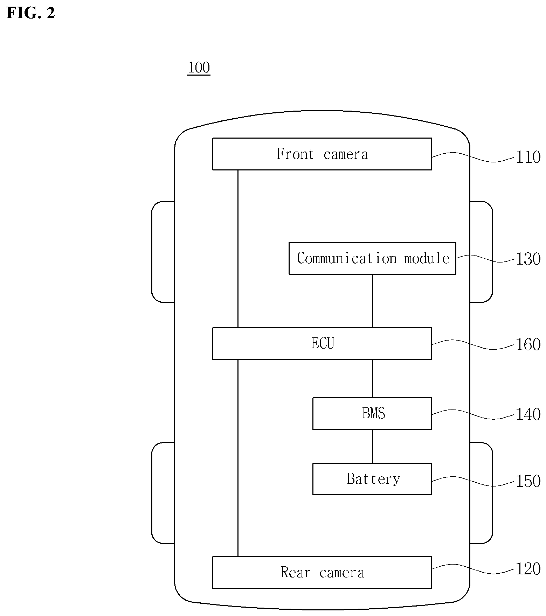

FIG. 2 is a block diagram illustrating a vehicle illustrated in FIG. 1.

Referring to FIG. 2, the vehicle 100 may include a front camera 110, a rear camera 120, a communication module 130, a battery management system (BMS) 140, a battery 150, and an electronic control unit (ECU) 160.

The front camera 110 may be mounted on the front of the vehicle 100 and may capture a front view of the vehicle 100 to obtain a front view image. In addition, the rear camera 120 may be mounted on the rear of the vehicle 100 and may capture a rear view of the vehicle 100 to obtain a rear view image. Here, the front camera 110 and the rear camera 120 may be mounted on the vehicle 100 by the manufacturer when the vehicle 100 is manufactured. In addition, dashcams including the front camera 110 and the rear camera 120 may be mounted on the vehicle 100 by the owner/driver of the vehicle 100.

The BMS 140 performs a diagnostic operation and/or a control operation for the battery 150. Here, the battery 150 may be a concept including a battery cell representing one secondary battery, a battery cell group including multiple battery cells, a battery module, a battery pack, a battery rack, etc.

That is, the BMS 140 can measure state information of the battery 150 and perform a diagnostic operation and/or a control operation for the battery 150 using the measured state information. Here, the state information of the battery 150 may include the internal state and/or the external state of the battery 150. For example, the BMS 140 may measure information such as the voltage, current, temperature, state of charge (SoC), depth of discharge (DoD), internal resistance, state of health (SoH), idle state, overvoltage or overcurrent state, and balancing state of the battery 150 as the internal state of the battery 150. For this purpose, the BMS 140 may be equipped with various sensors such as a voltage sensor and a current sensor. As another example, the BMS 140 may measure information such as temperature, humidity, smoke, and gas around the battery 150 as the external state of the battery 150. For this purpose, the BMS 140 may be equipped with sensors such as a temperature sensor, a humidity sensor, a smoke sensor, and a gas sensor.

The BMS 140 may provide the state information of the battery 150 to the ECU 160. For example, the BMS 140 may provide a measured temperature value and gas amount of the battery 150 to the ECU 160.

If the ECU 160 determines that a fire has occurred in the subject vehicle 100, the ECU 160 may provide a fire alarm to at least one of the subject vehicle 100 or surrounding vehicles 100-1 to 100-n to induce evacuation of the subject vehicle 100 and the surrounding vehicles 100-1 to 100-n located around the subject vehicle 100.

More specifically, the ECU 160 may obtain information on whether a fire has occurred in the subject vehicle 100 based on the temperature value and gas amount of the vehicle, that is, the temperature value and gas amount of the battery 150 provided from the BMS 140.

Upon determining that a fire has occurred in the subject vehicle 100, the ECU 160 may transmit/receive data to/from the integrated management server 300 through the communication module 130 to provide a fire alarm to at least one of the user terminal 200 corresponding to the subject vehicle 100 or the user terminals 200-1 to 200-n corresponding to the surrounding vehicles 100-1 to 100-n located around the subject vehicle.

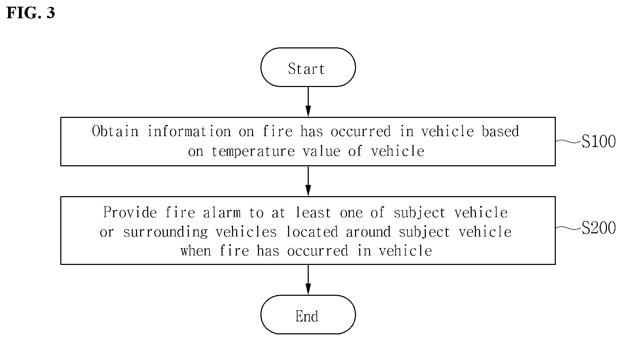

FIG. 3 is a flowchart illustrating an example of a vehicle fire alarm method according to an embodiment of the present disclosure.

Referring to FIG. 3, the ECU 160 of the vehicle 100 may obtain information on whether a fire has occurred in the vehicle 100 based on a temperature value of the vehicle 100 (S100).

The ECU 160 may determine that a fire has occurred in the vehicle 100 if the temperature value of the vehicle 100 is equal to or higher than a preset threshold temperature value. Here, the threshold temperature value may be a battery thermal runaway threshold value that is greater than a battery overheating threshold value. For example, if the temperature value of the vehicle 100, i.e., the temperature value of the battery 150 provided from the BMS 140, reaches the battery overheating threshold value, the ECU 160 may block charging/discharging of the battery 150 through the BMS 140, control the operation of a cooling system, and provide a status alarm to the driver. Furthermore, if the temperature value of the vehicle 100, i.e., the temperature value of the battery 150 provided from the BMS 140, exceeds the battery overheating threshold value and reaches the battery thermal runaway threshold value, the ECU 160 may promptly inform the users of the subject vehicle 100 and the surrounding vehicles 100-1 to 100-n of the vehicle fire situation and induce the vehicles to move, thereby preventing the spread of the fire.

In addition, the ECU 160 may determine that a fire has occurred in the vehicle 100 if the temperature value of the vehicle 100 is equal to or higher than a preset threshold temperature value and/or if the gas amount of the vehicle 100 is equal to or greater than a preset threshold gas amount. In this manner, if the temperature value and the gas amount are used to determine whether a vehicle fire has occurred, false alarms regarding the occurrence of a vehicle fire can be prevented.

Then, upon determining that a fire has occurred in the vehicle 100, the ECU 160 may provide a fire alarm to at least one of the vehicle 100 or surrounding vehicles 100-1 to 100-n located around the vehicle 100 (S200). That is, the ECU 160 may provide a fire alarm to the user terminals 200-1 to 200-n corresponding to the vehicle numbers of the surrounding vehicles 100-1 to 100-n identified using images acquired through the cameras 110 and 120 mounted on the vehicle 100.

Here, the images may include front and rear images acquired through cameras mounted on the vehicle 100 determined to have a fire, and front and rear images acquired through cameras mounted on the surrounding vehicles 100-1 to 100-n. For example, if it is determined that a fire has occurred in "vehicle A" in a state in which "vehicle B" is located on the left side of "vehicle A", "vehicle C" is located on the right side of "vehicle A", and "vehicle D" is located in front of "vehicle A", "vehicle A" may provide the fact that the fire has occurred therein to the surrounding vehicles, "vehicle B", "vehicle C", and "vehicle D". However, since it is less likely to identify the vehicle numbers of "vehicle B" and "vehicle C" located on the left and right sides of "vehicle A" using images acquired through cameras mounted on "vehicle A", the vehicle numbers of "vehicle B" and "vehicle C" located on the left and right sides of "vehicle A" may be identified by utilizing images acquired through cameras mounted on "vehicle D" located in front of "vehicle A".

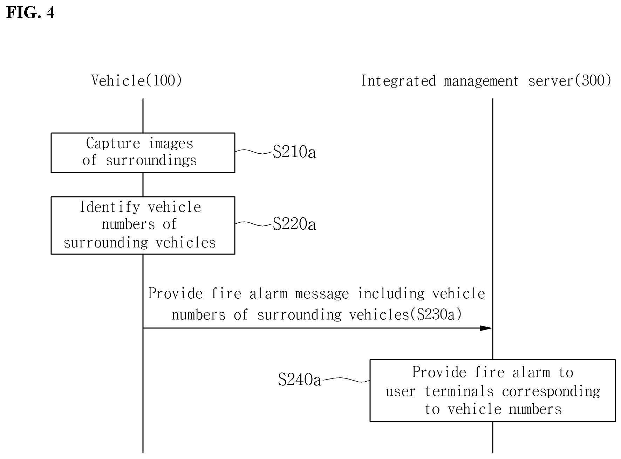

FIG. 4 is a flowchart illustrating an example of the fire alarm provision step illustrated in FIG. 3.

Referring to FIG. 4, the ECU 160 of the vehicle 100 determined to have a fire may capture images of the surroundings including the surrounding vehicles 100-1 to 100-n through the cameras 110 and 120 mounted on the vehicle 100 (S210a).

Then, the ECU 160 of the vehicle 100 may identify the vehicle numbers of the surrounding vehicles 100-1 to 100-n based on the images (S220a).

Thereafter, the ECU 160 of the vehicle 100 may provide a fire alarm message including the identified vehicle numbers of the surrounding vehicles 100-1 to 100-n and vehicle information of the vehicle 100 to the integrated management server 300 that manages the vehicle 100 (S230a).

Then, upon reception of the fire alarm message from the vehicle 100, the integrated management server 300 may provide a fire alarm to at least one of the user terminal 200 corresponding to the vehicle 100 or the user terminals 200-1 to 200-n corresponding to the vehicle numbers of the surrounding vehicles 100-1 to 100-n (S240a). At this time, in order to identify surrounding vehicles 100-1 to 100-n located on the left and right sides of the vehicle 100 that has transmitted the fire alarm message, the integrated management server 300 may send a request for image capture and vehicle number identification to the surrounding vehicles 100-1 to 100-n based on the vehicle numbers of the surrounding vehicles 100-1 to 100-n, receive the vehicle numbers identified by the surrounding vehicles 100-1 to 100-n from the surrounding vehicles 100-1 to 100-n, and provides a fire alarm to the user terminals 200-1 to 200-n corresponding thereto.

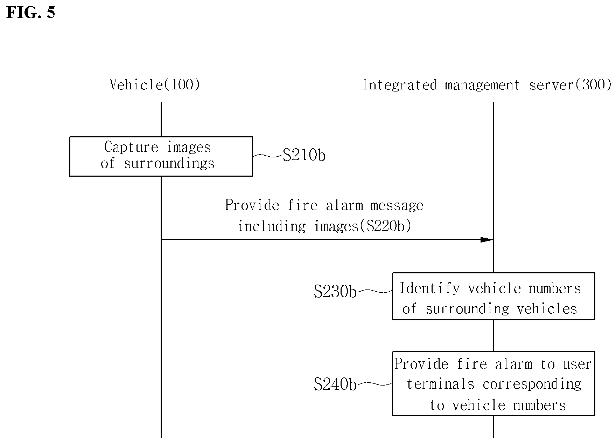

FIG. 5 is a flowchart illustrating another example of the fire alarm provision step illustrated in FIG. 3.

Referring to FIG. 5, the ECU 160 of the vehicle 100 determined to have a fire may capture images of the surroundings including the surrounding vehicles 100-1 to 100-n through the cameras 110 and 120 mounted on the vehicle 100 (S210b).

Then, the ECU 160 of the vehicle 100 may provide a fire alarm message including images and the vehicle information of the vehicle 100 to the integrated management server 300 that manages the vehicle 100 (S220b).

Upon reception of the fire alarm message from the vehicle 100, the integrated management server 300 may identify the vehicle numbers of the surrounding vehicles 100-1 to 100-n based on the images (S230b). At this time, in order to identify the surrounding vehicles 100-1 to 100-n located on the left and right sides of the vehicle 100 that has transmitted the fire alarm message, the integrated management server 300 sends a request for image capture to the surrounding vehicles 100-1 to 100-n based on the vehicle numbers of the surrounding vehicles 100-1 to 100-n, receive the images captured by the surrounding vehicles 100-1 to 100-n, and identify the vehicle numbers therefrom.

Then, the integrated management server 300 may provide a fire alarm to at least one of the user terminals 200-1 to 200-n corresponding to the identified vehicle number of the surrounding vehicles 100-1 to 100-n or the user terminal 200 corresponding to the vehicle information of the vehicle 100 (S240b).

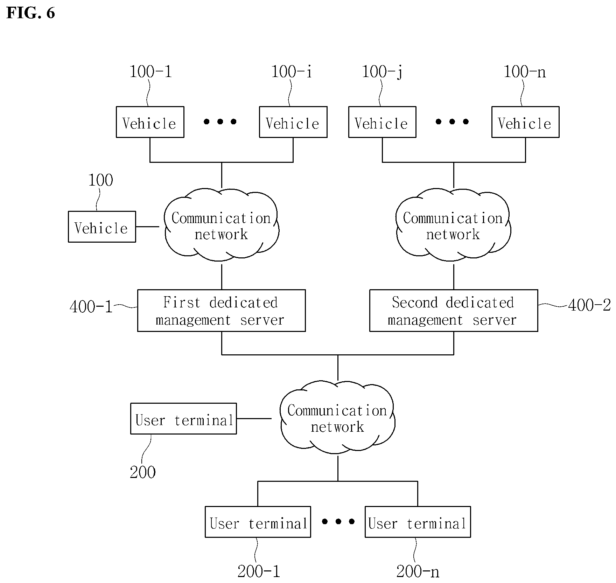

Another example of a vehicle fire alarm operation according to an embodiment of the present disclosure will be described with reference to FIG. 6 to FIG. 9.

FIG. 6 is a block diagram illustrating another example of the vehicle fire alarm system according to an embodiment of the present disclosure.

Since the vehicle fire alarm system according to the present embodiment is substantially the same as the vehicle fire alarm system described in FIG. 1, only different parts will be described.

Referring to FIG. 6, the vehicle fire alarm system according to an embodiment of the present disclosure may include a plurality of dedicated management servers 400 for manufacturers of vehicles 100, 100-1 to 100-i, and 100-j to 100-n instead of the integrated management server 300 described in FIG. 1. That is, the vehicle fire alarm system may include a first dedicated management server 400-1 that manages a plurality of vehicles 100 and 100-1 to 100-i manufactured by "manufacturer 1" and a second dedicated management server 400-2 that manages a plurality of vehicles 100-j to 100-n manufactured by "manufacturer 2". Although FIG. 6 illustrates that there are two dedicated management servers 400-1, 400-2, this is merely an example, and if the number of manufacturers is n, there may be n dedicated management servers 400-1 to 400-n-1. In addition, for convenience of explanation, the dedicated management server 400 that manages a vehicle 100 determined to have a fire is referred to as the first dedicated management server 400-1, and the dedicated management server 400 that manages vehicles 100-j to 100-n whose manufacturer is different from the manufacturer of the vehicle 100 determined to have a fire is referred to as the second dedicated management server 400-2.

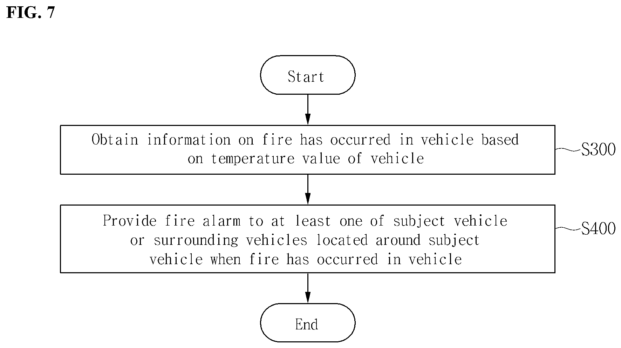

FIG. 7 is a flowchart illustrating another example of the vehicle fire alarm method according to an embodiment of the present disclosure.

Referring to FIG. 7, the ECU 160 of the vehicle 100 may obtain information on whether a fire has occurred in the vehicle 100 based on the temperature value of the vehicle 100 (S300).

At this time, the ECU 160 may determine that a fire has occurred in the vehicle 100 if the temperature value of the vehicle 100 is equal to or higher than a preset threshold temperature value. Here, the threshold temperature value may be a battery thermal runaway threshold value that is greater than a battery overheating threshold value. For example, if the temperature value of the vehicle 100, i.e., the temperature value of the battery 150 provided from the BMS 140, reaches the battery overheating threshold value, the ECU 160 may block charging/discharging of the battery 150 through the BMS 140, control the operation of the cooling system, and provide a status alarm to the driver. Furthermore, if the temperature value of the vehicle 100, i.e., the temperature value of the battery 150 provided from the BMS 140, exceeds the battery overheating threshold value and reaches the battery thermal runaway threshold value, the ECU 160 may promptly inform the users of the vehicle 100 and surrounding vehicles 100-1 to 100-i and 100-j to 100-n of the vehicle fire situation and induce the vehicles to move, thereby preventing the spread of the fire.

In addition, the ECU 160 may determine that a fire has occurred in the vehicle 100 if the temperature value of the vehicle 100 is equal to or higher than the preset threshold temperature value and/or if the gas amount of the vehicle 100 is equal to or greater than a preset threshold gas amount. In this way, if the temperature value and the gas amount are used to determine whether a vehicle fire has occurred, false alarms regarding the occurrence of a vehicle fire can be prevented.

If the ECU 160 determines that a fire has occurred in the vehicle 100, the ECU 160 may provide a fire alarm to at least one of the vehicle 100 or the surrounding vehicles 100-1 to 100-i and 100-j to 100-n located around the vehicle 100 (S400). That is, the ECU 160 may provide a fire alarm to the user terminals 200-1 to 200-n corresponding to the vehicle numbers of the surrounding vehicles 100-1 to 100-i and 100-j to 100-n identified using images acquired by the cameras 110 and 120 mounted on the vehicle 100.

Here, the images may include front and rear view images acquired through the cameras mounted on the vehicle 100 determined to have a fire, and front and rear view images acquired through cameras mounted on the surrounding vehicles 100-1 to 100-i and 100-j to 100-n. For example, if it is determined that a fire has occurred in "vehicle A" in a state in which "vehicle B" is located on the left side of "vehicle A", "vehicle C" is located on the right side of "vehicle A", and "vehicle D" is located in front of "vehicle A", "vehicle A" may provide the fact that the fire has occurred to the surrounding vehicles, "vehicle B", "vehicle C", and "vehicle D". However, since it is less likely to identify the vehicle numbers of "vehicle B" and "vehicle C" located on the left and right sides of "vehicle A" using the images acquired through the cameras mounted on "vehicle A", the vehicle numbers of "vehicle B" and "vehicle C" located on the left and right sides of "vehicle A" may be identified using images acquired through the cameras mounted on "vehicle D" located in front of "vehicle A".

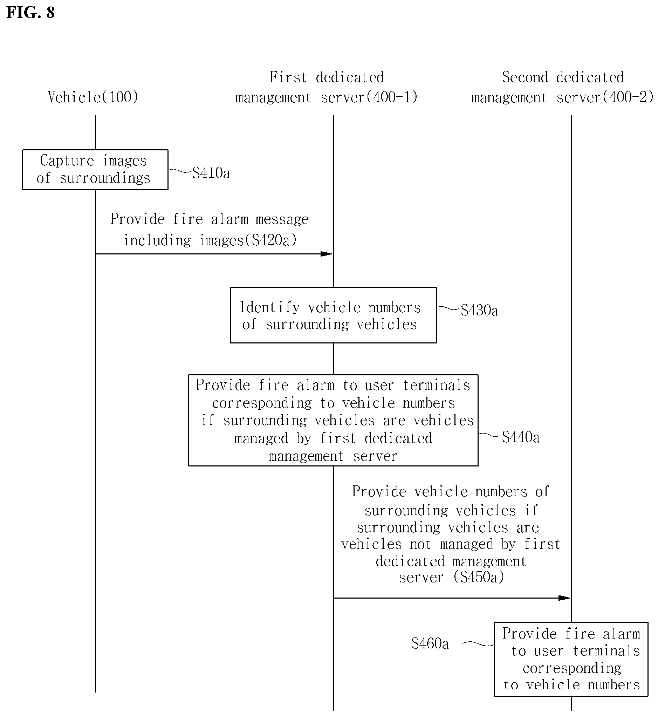

FIG. 8 is a flowchart illustrating an example of the fire alarm provision step illustrated in FIG. 7.

Referring to FIG. 8, the ECU 160 of the vehicle 100 determined to have a fire may capture images of the surroundings including the surrounding vehicles 100-1 to 100-i and 100-j to 100-n through the cameras 110 and 120 mounted on the vehicle 100 (S410a).

Then, the ECU 160 of the vehicle 100 may provide a fire alarm message including images and vehicle information of the vehicle 100 to the first dedicated management server 400-1 that manages the vehicle 100 (S420a).

Upon reception of the fire alarm message including the images acquired by the cameras 110 and 120 mounted on the vehicle 100 from the vehicle 100, the first dedicated management server 400-1 may identify the vehicle numbers of the surrounding vehicles 100-1 to 100-i and 100-j to 100-n based on the images (S430a). At this time, in order to identify the surrounding vehicles 100-1 to 100-i and 100-j to 100-n located on the left and right sides of the vehicle 100 that has transmitted the fire alarm message, the first dedicated management server 400-1 may send a request for image capture to the surrounding vehicles 100-1 to 100-i and 100-j to 100-n based on the vehicle numbers of the surrounding vehicles 100-1 to 100-i and 100-j to 100-n directly or through the second dedicated management server 400-2, receive images captured by the surrounding vehicles 100-1 to 100-i and 100-j to 100-n, and identify the vehicle numbers from the images.

If the surrounding vehicles 100-1 to 100-i and 100-j to 100-n are vehicles 100-1 to 100-i managed by the first dedicated management server 400-1, the first dedicated management server 400-1 may provide a fire alarm to at least one of the user terminals 200-1 to 200-n corresponding to the vehicle numbers of the surrounding vehicles 100-1 to 100-i or the user terminals 200 corresponding to the vehicle information of the vehicle 100 (S440a).

On the other hand, if the surrounding vehicles 100-1 to 100-i and 100-j to 100-n are vehicles 100-j to 100-n that are not managed by the first dedicated management server 400-1, the first dedicated management server 400-1 may provide the vehicle numbers of the surrounding vehicles 100-j to 100-n to the second dedicated management server 400-2 selected based on the manufacturer of the surrounding vehicles 100-j to 100-n (S450a).

Here, the first dedicated management server 400-1 may check whether the surrounding vehicles 100-1 to 100-i and 100-j to 100-n are vehicles 100-1 to 100-i managed thereby in various ways. For example, the first dedicated management server 400-1 may check whether the surrounding vehicles are vehicles managed thereby based on the vehicle numbers of the surrounding vehicles by using a vehicle information DB included in the first dedicated management server 400-1. In addition, the first dedicated management server 400-1 may check whether the surrounding vehicles are vehicles managed thereby based on the manufacturers of the surrounding vehicles. At this time, the first dedicated management server 400-1 may identify the manufacturers of the surrounding vehicles from the images included in the fire alarm message.

Upon reception of the vehicle numbers of the surrounding vehicles 100-j to 100-n from the first dedicated management server 400-1, the second dedicated management server 400-2 may provide a fire alarm to the user terminals 200-1 to 200-n corresponding to the vehicle numbers of the surrounding vehicles 100-j to 100-n (S460a).

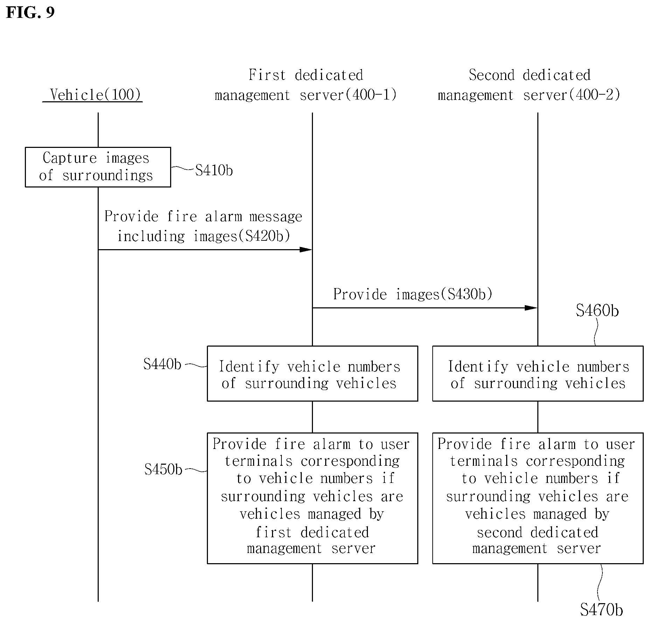

FIG. 9 is a flowchart illustrating another example of the fire alarm providing step illustrated in FIG. 7.

Referring to FIG. 9, the ECU 160 of the vehicle 100 determined to have a fire may capture images of the surroundings including the surrounding vehicles 100-1 to 100-i and 100-j to 100-n through the cameras 110 and 120) mounted on the vehicle 100 (S410b).

Then, the ECU 160 of the vehicle 100 may provide a fire alarm message including the images and the vehicle information of the vehicle 100 to the first dedicated management server 400-1 that manages the vehicle 100 (S420b).

Upon reception of the fire alarm message including the images acquired through the cameras 110 and 120 mounted on the vehicle 100 from the vehicle 100, the first dedicated management server 400-1 may provide the images to at least one second dedicated management server 400-2 (S430b). At this time, in order to identify the surrounding vehicles 100-1 to 100-i and 100-j to 100-n located on the left and right sides of the vehicle 100 that has transmitted the fire alarm message, the first dedicated management server 400-1 may send a request for image capture to the surrounding vehicles 100-1 to 100-i and 100-j to 100-n based on the vehicle numbers of the surrounding vehicles 100-1 to 100-i and 100-j to 100-n identified from the images directly or through the second dedicated management server 400-2, receive images captured by the surrounding vehicles 100-1 to 100-i and 100-j to 100-n, and provide images including the received images to at least one second dedicated management server 400-2.

Then, the first dedicated management server 400-1 may identify the vehicle numbers of surrounding vehicles 100-1 to 100-i and 100-j to 100-n based on the images (S440b).

If the surrounding vehicles 100-1 to 100-i, and 100-j to 100-n are vehicles 100-1 to 100-i managed by the first dedicated management server 400-1, the first dedicated management server 400-1 may provide a fire alarm to at least one of the user terminals 200-1 to 200-n corresponding to the vehicle numbers of the surrounding vehicles 100-1 to 100-i or the user terminal 200 corresponding to the vehicle information of the vehicle 100 (S450b).

Here, the first dedicated management server 400-1 may check whether the surrounding vehicles 100-1 to 100-i and 100-j to 100-n are vehicles 100-1 to 100-i managed thereby in various ways. For example, the first dedicated management server 400-1 may check whether the surrounding vehicles are vehicles managed thereby based on the vehicle numbers of the surrounding vehicles by using a vehicle information DB included in the first dedicated management server 400-1. In addition, the first dedicated management server 400-1 may check whether the surrounding vehicles are vehicles managed thereby based on the manufacturers of the surrounding vehicles. At this time, the first dedicated management server 400-1 may identify the manufacturers of the surrounding vehicles from the images included in the fire alarm message.

Upon reception of the images from the first dedicated management server 400-1, the second dedicated management server 400-2 may identify the vehicle numbers of the surrounding vehicles 100-1 to 100-i and 100-j to 100-n based on the images (S460b).

Then, if the surrounding vehicles 100-1 to 100-i and 100-j to 100-n are vehicles 100-j to 100-n managed by the second dedicated management server 400-2, the second dedicated management server 400-2 may provide a fire alarm to the user terminals 200-1 to 200-n corresponding to the vehicle numbers of the surrounding vehicles 100-j to 100-n (S470b).

Here, the second dedicated management server 400-2 may check whether the surrounding vehicles 100-1 to 100-i and 100-j to 100-n are vehicles 100-j to 100-n managed thereby in various ways. For example, the second dedicated management server 400-2 may check whether the surrounding vehicles are vehicles managed thereby based on the vehicle numbers of the surrounding vehicles by using a vehicle information DB included in the second dedicated management server 400-2. In addition, the second dedicated management server 400-2 may check whether the surrounding vehicles are vehicles managed thereby based on the manufacturers of the surrounding vehicles. At this time, the second dedicated management server 400-2 may identify the manufacturers of the surrounding vehicles from images provided by the first dedicated management server 400-1.

The operations according to the embodiments of the present disclosure described above can be implemented in the form of program instructions that can be performed through various computer means and recorded on a computer-readable storage medium. The computer-readable storage medium refers to any medium that participates in providing instructions to a processor for execution. The computer-readable storage medium may include program instructions, data files, data structures, or a combination thereof. For example, the computer-readable storage medium may include a magnetic medium, an optical storage medium, a memory, etc. The computer program may be distributed on computer systems connected through a network, and computer-readable code may be stored and executed in a distributed manner. Functional programs, code, and code segments for implementing the embodiments of the present disclosure may be easily inferred by programmers in the technical field to which the embodiments of the present disclosure belong.

The embodiments of the present disclosure are intended to explain the technical idea, and the scope of the technical idea of the embodiments of the present disclosure is not limited by these embodiments. The protection scope of the embodiments of the present disclosure should be interpreted by the following claims, and all technical ideas within the equivalent scope should be interpreted as being included in the scope of the rights of the embodiments of the present disclosure.

### <Detailed Description of Main Elements>

100, 100-1 to 100-i, 100-j to 100-n: Vehicle
110: Front camera
120: Rear camera
130: Communication module
140: BMS
150: battery
160: ECU
200, 200-1 to 200-n: User terminal
300: Integrated management server
400: Dedicated management server
400-1: First dedicated management server
400-2: Second dedicated management server

## Claims

1. A vehicle fire alarm method comprising:
obtaining information on whether a fire has occurred in a vehicle based on a temperature value of the vehicle; and
providing a fire alarm to at least one of a user terminal corresponding to the vehicle or a user terminal corresponding to a surrounding vehicle located around the vehicle if it is determined that a fire has occurred in the vehicle.

2. The vehicle fire alarm method of claim 1, wherein the providing a fire alarm comprises providing a fire alarm to a user terminal corresponding to a vehicle number of the surrounding vehicle identified using images acquired through cameras mounted on the vehicle.

3. The vehicle fire alarm method of claim 2, wherein the providing a fire alarm comprises obtaining the images including the surrounding vehicle through the cameras mounted on the vehicle, identifying the vehicle number of the surrounding vehicle based on the images, and providing a fire alarm message including the vehicle number of the surrounding vehicle and vehicle information of the vehicle to an integrated management server to provide the fire alarm to at least one of the user terminal corresponding to the vehicle information of the vehicle or the user terminal corresponding to the vehicle number of the surrounding vehicle through the integrated management server.

4. The vehicle fire alarm method of claim 2, wherein the providing a fire alarm comprises obtaining the images including the surrounding vehicle through the cameras mounted on the vehicle and providing a fire alarm message including the images and the vehicle information of the vehicle to an integrated management server to provide the fire alarm to at least one of the user terminal corresponding to the vehicle number of the surrounding vehicle identified based on the images or the user terminal corresponding to the vehicle information of the vehicle through the integrated management server.

5. The vehicle fire alarm method of claim 1, wherein the providing a fire alarm comprises providing a fire alarm message including the vehicle information of the vehicle to a first dedicated management server managing the vehicle if it is determined that a fire has occurred in the vehicle, and providing a fire alarm to the user terminal corresponding to the vehicle information of the vehicle through the first dedicated management server.

6. The vehicle fire alarm method of claim 5, wherein, the first dedicated management server identifies the vehicle number of the surrounding vehicle based on the images acquired by the cameras mounted on the vehicle and included in the fire alarm message when the fire alarm message is received from the vehicle, provides a fire alarm to the user terminal corresponding to the vehicle number of the surrounding vehicle if the surrounding vehicle is a vehicle managed by the first dedicated management server, and provides the vehicle number of the surrounding vehicle to a second dedicated management server selected based on a manufacturer of the surrounding vehicle if the surrounding vehicle is a vehicle not managed by the first dedicated management server.

7. The vehicle fire alarm method of claim 6, wherein the second dedicated management server provides a fire alarm to the user terminal corresponding to the vehicle number of the surrounding vehicle based on the vehicle number of the surrounding vehicle being received from the first dedicated management server.

8. The vehicle fire alarm method of claim 5, wherein the first dedicated management server provides the images acquired by the cameras mounted on the vehicle and included in the fire alarm message to at least one second dedicated management server when the fire alarm message is received from the vehicle, identifies the vehicle number of the surrounding vehicle based on the images, and provides a fire alarm to the user terminal corresponding to the vehicle number of the surrounding vehicle if the surrounding vehicle is a vehicle managed by the first dedicated management server.

9. The vehicle fire alarm method of claim 8, wherein, when the images are received from the first dedicated management server, the second dedicated management server identifies the vehicle number of the surrounding vehicle based on the images, and provides a fire alarm to the user terminal corresponding to the vehicle number of the surrounding vehicle if the surrounding vehicle is a vehicle managed by the second dedicated management server.

10. The vehicle fire alarm method of claim 2, wherein the images include front and rear view images acquired through the cameras mounted on the vehicle determined to have a fire, and front and rear view images acquired through cameras mounted on the surrounding vehicle.

11. The vehicle fire alarm method of claim 1, wherein the obtaining information on whether a fire has occurred in a vehicle comprises determining that a fire has occurred in the vehicle if the temperature value of the vehicle is equal to or higher than a preset threshold temperature value.

12. The vehicle fire alarm method of claim 11, wherein the threshold temperature value is a battery thermal runaway threshold value greater than a battery overheating threshold value.

13. The vehicle fire alarm method of claim 1, wherein the obtaining information on whether a fire has occurred in a vehicle comprises determining that a fire has occurred in the vehicle if the temperature value of the vehicle is equal to or higher than a preset threshold temperature value and/or a gas amount of the vehicle is equal to or greater than a preset threshold gas amount.

14. A computer-readable storage medium for storing a program to execute the vehicle fire alarm method of any one of claims 1 to 13 on a computer.

15. A vehicle comprising:
a temperature sensor configured to measure temperature; and
an ECU configured to obtain information on whether a fire has occurred based on a temperature value measured through the temperature sensor, and provide a fire alarm to at least one of a user terminal corresponding to the vehicle or a user terminal corresponding to a surrounding vehicle located around the vehicle.
